# DEMANDE DE BREVET EUROPEEN

(11) **EP 1 747 936 A2**
(43) Date de publication de la demande: **31.01.2007**
(21) Numéro de dépôt: 06291221.7
(22) Date de dépôt: 27.07.2006
(51) Int. Cl.: B60N 2/20, B60N 2/22

(54) **Système d'assistance au rabattement d'un dossier sur une assise de siège de véhicule automobile**

(30) Priorité: 27.07.2005 FR 0552335
(71) Demandeur: Centre d'etude et de recherche pour l'automobile (CERA), 51100 Reims (FR)
(72) Inventeur: Zediar, Ahmed, 51100 Reims (FR)
(74) Mandataire: Sayettat, Julien Christian

(57) **Abrégé**

L'invention concerne un système (1) d'assistance au rabattement d'un premier élément structurel (2) sur un deuxième élément structurel (3) entre une position déployée et une position rabattue, lesdits éléments appartenant à une structure de siège de véhicule automobile rabattable, ledit premier élément étant monté en rotation par rapport audit deuxième élément selon un axe transversal (4), ledit système comprenant un dispositif de contrainte (5) élastique solidaire dudit axe transversal et un moyen d'actionnement (6) dudit dispositif qui est solidaire d'un desdits éléments, ledit dispositif étant agencé pour, dans les positions proches de la position déployée, exercer un effort positif sur ledit moyen d'actionnement et dans les positions proches de la position rabattue, exercer un effort négatif sur ledit moyen d'actionnement.

L'invention concerne également un siège de véhicule automobile comprenant un tel système.

## Description

L'invention concerne un système d'assistance au rabattement d'un premier élément structurel sur un deuxième élément structurel, lesdits éléments appartenant à une structure de siège de véhicule automobile rabattable, et un siège de véhicule automobile comprenant un tel dispositif.

Il est connu de prévoir de tels dispositifs, permettant soit d'amorcer le rabattement du siège soit de le freiner lors de la phase finale de rabattement, notamment par des moyens pneumatiques, ceci afin de procurer à l'utilisateur un confort d'utilisation amélioré.

Les dispositifs existants sont toutefois généralement complexes et requièrent de nombreux composants, ce qui entraîne des coûts importants, peu compatibles avec les exigences de l'industrie automobile.

L'invention a pour but de pallier ces inconvénients en proposant un dispositif de conception simple, minimisant le nombre de composants.

A cet effet, et selon un premier aspect, l'invention propose un système d'assistance au rabattement d'un premier élément structurel sur un deuxième élément structurel entre une position déployée et une position rabattue, lesdits éléments appartenant à une structure de siège de véhicule automobile rabattable, ledit premier élément étant monté en rotation par rapport audit deuxième élément selon un axe transversal, ledit système comprenant un dispositif de contrainte élastique solidaire de l'axe transversal et un moyen d'actionnement dudit dispositif qui est solidaire d'un des éléments, ledit dispositif étant agencé pour, dans les positions proches de la position déployée, exercer un effort positif sur le moyen d'actionnement et dans les positions proches de la position rabattue, exercer un effort négatif sur le moyen d'actionnement.

Par « effort positif », on entend un effort contribuant à favoriser le mouvement de rabattement. Par « effort négatif », on entend un effort contribuant à freiner le mouvement de rabattement.

Un tel système permet, de manière particulièrement simple, en comprenant un dispositif de contrainte unique, d'amorcer le rabattement du dossier, puis de le freiner lors de la phase finale de rabattement, ce qui offre à l'utilisateur un grand confort de manipulation.

Selon un deuxième aspect, l'invention propose un siège de véhicule automobile à dossier rabattable, ledit siège comprenant une assise et un dossier monté en rotation autour de l'axe transversal et un système d'assistance au rabattement tel que décrit ci-dessus et un moyen de verrouillage réversible permettant un verrouillage en position déployée et un passage de la position déployée à la position rabattue.

D'autres particularités et avantages de l'invention apparaîtront dans la description qui suit, faite en référence aux figures jointes dans lesquelles :
- la figure 1 est une vue schématique en perspective, selon un premier mode de réalisation, d'un système selon l'invention, ledit système étant en position déployée,
- la figure 2 est une représentation schématique en coupe du système de la figure 1 en position déployée (2a) et rabattue (2b).
- la figure 3 est une représentation schématique en coupe d'un système, selon un deuxième mode de réalisation, en position déployée (3a) et rabattue (3b).

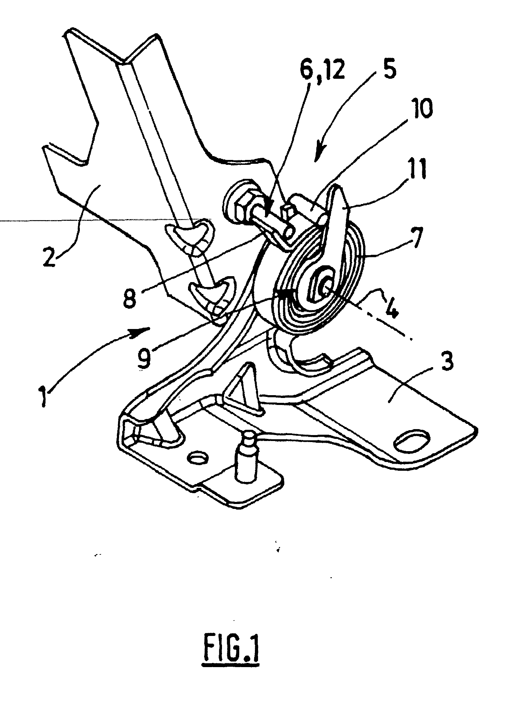

Selon un premier mode de réalisation, on décrit à présent, en référence à la figure 1, un système 1 d'assistance au rabattement d'un premier élément structurel 2 sur un deuxième élément structurel 3 entre une position déployée et une position rabattue. Ces éléments 2 et 3 appartiennent à une structure de siège automobile rabattable

Le premier élément 2 est monté en rotation par rapport au deuxième élément 3 selon un axe transversal 4.

Le système comprend un dispositif de contrainte élastique 5 solidaire de l'axe transversal 4 et un moyen d'actionnement 6 dudit dispositif qui est solidaire du premier élément 2.

Le dispositif de contrainte 5 est agencé pour, dans les positions proches de la position déployée, exercer un effort positif sur le moyen d'actionnement 6 et dans les positions proches de la position rabattue, exercer un effort négatif sur ledit moyen d'actionnement.

Selon la réalisation représentée, le dispositif de contrainte 5 comprend :
- un ressort à lame 7 enroulé en spirale sensiblement autour de l'axe transversal 4, ledit ressort comprenant une extrémité externe 8 et une extrémité interne 9,
- une deuxième butée 10 associée au deuxième élément 3,
- une aile radiale 11 en rotation sensiblement selon l'axe transversal 4, ladite aile étant associée à l'extrémité interne 9 du ressort 7 et en saillie par rapport au diamètre externe dudit ressort.

Le moyen d'actionnement 6 comprend, quant à lui, une première butée 12 associée au premier élément 2.

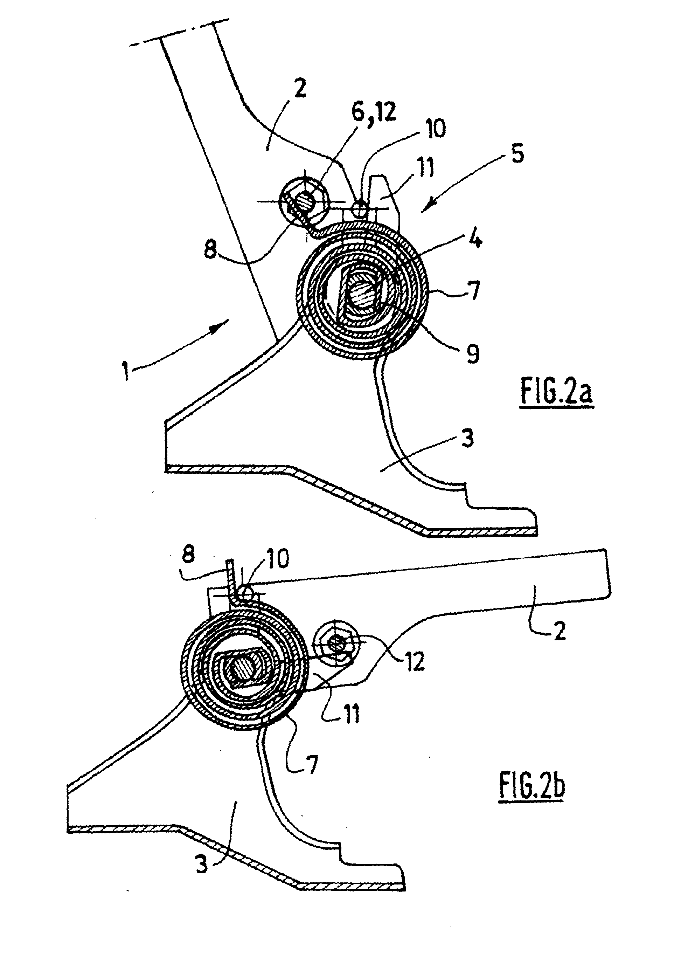

Le ressort 7, les butées 10, 12, l'aile 11 et les éléments 2, 3 sont agencés de sorte que :
- en position angulaire proche de la position déployée (figure 2a), l'extrémité externe 8 dudit ressort est en appui contre ladite première butée et ladite aile en appui contre ladite deuxième butée, de sorte à exercer un effort positif entraînant le rabattement dudit premier élément sous l'effet de la détente dudit ressort,
- en position angulaire proche de la position rabattue (figure 2b), l'extrémité externe 8 dudit ressort vient en appui contre ladite deuxième butée et ladite première butée vient en appui contre ladite aile, de sorte à exercer un effort négatif freinant le rabattement dudit premier élément, sous l'effet de la compression dudit ressort.

Selon la réalisation représentée, le premier élément structurel 2 est l'armature de dossier. En variante non représentée, il peut être formé de l'armature d'assise.

Selon une réalisation non représentée, le deuxième élément structurel 3 est l'armature d'assise. En variante, on peut permuter le premier 2 et le deuxième 3 élément, ceci en fonction des contraintes de conception du véhicule.

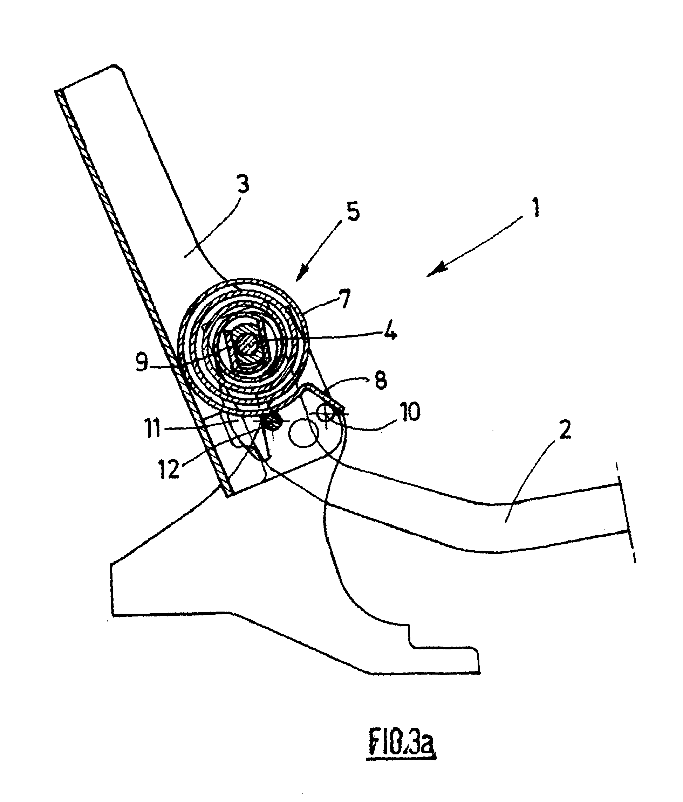

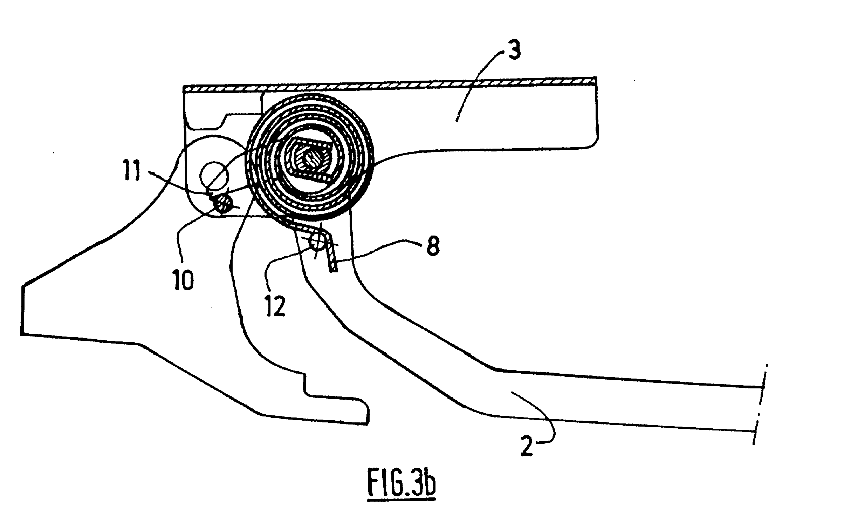

Un deuxième mode de réalisation, représenté en figure 3, présente un fonctionnement analogue à celui de la première réalisation, aux différences suivantes près :
- le dispositif de contrainte 5 comprend une première butée 12 associée au premier élément 2.
- le moyen d'actionnement 6 comprend une deuxième butée 10 associée au deuxième élément 3.

De la sorte :
- en position angulaire proche de la position déployée, l'extrémité externe 8 du ressort 7 est en appui contre la deuxième butée 10 et l'aile 11 en appui contre la première butée 12, de sorte à exercer un effort positif entraînant le rabattement du deuxième élément 3 sous l'effet de la détente dudit ressort,
- en position angulaire proche de la position rabattue, l'extrémité externe 8 du ressort 7 vient en appui contre la première butée 12 et la deuxième butée 10 vient en appui contre l'aile 11, de sorte à exercer un effort négatif freinant le rabattement du deuxième élément 3, sous l'effet de la compression dudit ressort.

Selon la première réalisation, le deuxième élément structurel 3 est fixe par rapport à la structure de plancher du véhicule, et peut être notamment formé de ladite structure ou d'une glissière de siège associée à ladite structure.

Selon une réalisation non représentée, le deuxième élément structurel 3 est une bielle associée en rotation à l'armature d'assise - respectivement de dossier - lorsque le premier élément 2 est associé à l'armature de dossier - respectivement d'assise.

Selon les deux réalisations représentées, la première 12 et la deuxième 10 butée sont des tiges disposées en saillie par rapport aux éléments 2, 3 auxquels elles sont associées, l'extrémité externe 8 du ressort étant recourbée en saillie vers l'extérieur, de sorte à pouvoir prendre appui contre lesdites butées.

Selon les deux réalisations représentées, l'extrémité interne 9 du ressort est recourbée en U, de sorte à coopérer avec une tige issue de l'aile 11 selon l'axe transversal 4, ladite tige comprenant deux méplats coopérant avec les branches du U de sorte à permettre un blocage en rotation entre ladite extrémité interne et ladite aile.

Le système selon l'invention est destiné à être incorporé à un siège de véhicule automobile rabattable, le siège comprenant une assise et un dossier monté en rotation autour de l'axe transversal 4. Le siège comprend en outre un premier moyen de verrouillage réversible, permettant un verrouillage en position déployée et un passage de la position déployée à la position rabattue.

Le siège peut comprendre en outre un deuxième moyen de verrouillage réversible permettant un verrouillage en position rabattue et un passage de la position rabattue à la position déployée.

Un siège comprenant un système d'actionnement selon l'invention peut ainsi être manipulé de la façon suivante :
- à partir de la position déployée, l'utilisateur déverrouille le premier moyen de verrouillage,
- sous l'effet du système d'assistance, le dossier du siège est entraîné en accélération puis en décélération en position de rabattement, ceci jusqu'à verrouillage en position rabattue, soit du fait du propre poids du dossier, soit avec une assistance de l'utilisateur,
- à partir de la position rabattue, l'utilisateur déverrouille le deuxième moyen de verrouillage,
- sous l'effet du système d'assistance, le dossier du siège est entraîné vers la position déployée, l'utilisateur amenant le siège en position déployée, et le verrouillant par le premier moyen de verrouillage.

On dispose ainsi d'une cinématique de manipulation aisée du siège, et ceci avec l'assistance d'un système d'assistance de conception simplifiée.

## Revendications

1. Système (1) d'assistance au rabattement d'un premier élément structurel (2) sur un deuxième élément structurel (3) entre une position déployée et une position rabattue, lesdits éléments appartenant à une structure de siège de véhicule automobile rabattable, ledit premier élément étant monté en rotation par rapport audit deuxième élément selon un axe transversal (4), ledit système comprenant un dispositif de contrainte (5) élastique solidaire dudit axe transversal et un moyen d'actionnement (6) dudit dispositif qui est solidaire d'un desdits éléments, ledit dispositif étant agencé pour, dans les positions proches de la position déployée, exercer un effort positif sur ledit moyen d'actionnement et dans les positions proches de la position rabattue, exercer un effort négatif sur ledit moyen d'actionnement.

2. Système d'assistance selon la revendication 1, **caractérisé en ce que** le dispositif de contrainte (5) comprend :
• un ressort à lame (7) enroulé en spirale sensiblement autour de l'axe transversal (4), ledit ressort comprenant une extrémité externe (8) et une extrémité interne (9),
• une deuxième butée (10) associée au deuxième élément (3),
• une aile radiale (11) en rotation sensiblement selon l'axe transversal (4), ladite aile étant associée à ladite extrémité interne du ressort et en saillie par rapport au diamètre externe dudit ressort,
et **en ce que** le moyen d'actionnement (6) comprend une première butée (12) associée au premier élément (2), ledit ressort, lesdites butées, ladite aile et lesdits éléments étant agencés de sorte que :
• en position angulaire proche de la position déployée, ladite extrémité externe dudit ressort est en appui contre ladite première butée et ladite aile en appui contre ladite deuxième butée, de sorte à exercer un effort positif entraînant le rabattement dudit premier élément sous l'effet de la détente dudit ressort,
• en position angulaire proche de la position rabattue, l'extrémité externe dudit ressort vient en appui contre ladite deuxième butée et ladite première butée vient en appui contre ladite aile, de sorte à exercer un effort négatif freinant le rabattement dudit premier élément, sous l'effet de la compression dudit ressort.

3. Système d'assistance selon la revendication 1, **caractérisé en ce que** le dispositif de contrainte (5) comprend :
• un ressort à lame (7) enroulé en spirale sensiblement autour de l'axe transversal (4), ledit ressort comprenant une extrémité externe (8) et une extrémité interne (9),
• une première butée (12) associée au premier élément (2),
• une aile radiale (11) en rotation sensiblement selon ledit axe transversal, ladite aile étant associée à ladite extrémité interne dudit ressort et en saillie par rapport au diamètre externe dudit ressort,
et **en ce que** le moyen d'actionnement (6) comprend une deuxième butée (10) associée au deuxième élément (3), ledit ressort, lesdites butées, ladite aile et lesdits éléments étant agencés de sorte que :
• en position angulaire proche de la position déployée, ladite extrémité externe dudit ressort est en appui contre ladite deuxième butée et ladite aile en appui contre ladite première butée, de sorte à exercer un effort positif entraînant le rabattement dudit deuxième élément sous l'effet de la détente dudit ressort,
• en position angulaire proche de la position rabattue, ladite extrémité externe dudit ressort vient en appui contre ladite première butée et ladite deuxième butée vient en appui cantre ladite aile, de sorte à exercer un effort négatif freinant le rabattement dudit deuxième élément, sous l'effet de la compression dudit ressort.

4. Système selon l'une quelconque des revendications 1 à 3, **caractérisé en ce que** le premier élément structurel (2) est l'armature d'assise ou l'armature de dossier.

5. Système selon la revendication 4, **caractérisé en ce que** le deuxième élément structurel (3) est l'armature d'assise - respectivement de dossier - lorsque le premier élément structurel (2) est l'armature de dossier - respectivement d'assise.

6. Système selon l'une quelconque des revendications 1 à 3, **caractérisé en ce que** le premier élément structurel (2) est une bielle associée en rotation à l'armature d'assise ou de dossier.

7. Système selon la revendication 6, lorsqu'elle dépend de la revendication 2, **caractérisé en ce que** le deuxième élément structurel (3) est fixe par rapport à la structure de plancher du véhicule, et est notamment formé de ladite structure ou d'une glissière de siège associée à ladite structure.

8. Système selon la revendication 6, **caractérisé en ce que** le deuxième élément structurel (3) est une bielle associée en rotation à l'armature d'assise - respectivement de dossier - lorsque le premier élément (2) est associé à l'armature de dossier - respectivement d'assise.

9. Système selon l'une quelconque des revendications 2 à 8, **caractérisé en ce que** la première (12) et la deuxième (10) butée sont des tiges disposées en saillie par rapport aux éléments (2, 3) auxquels elles sont associées, l'extrémité externe (8) du ressort étant recourbée en saillie vers l'extérieur, de sorte à pouvoir prendre appui contre lesdites butées.

10. Système selon l'une quelconque des revendications 2 à 9, **caractérisé en ce que** l'extrémité interne (9) du ressort est recourbée en U, de sorte à coopérer avec une tige issue de l'aile selon l'axe transversal (4), ladite tige comprenant deux méplats coopérant avec les branches du U de sorte à permettre un blocage en rotation entre ladite extrémité interne et ladite aile.

11. Siège de véhicule automobile rabattable, ledit siège comprenant une assise et un dossier monté en rotation autour de l'axe transversal (4) et un système selon l'une quelconque des revendications précédentes et un premier moyen de verrouillage réversible permettant un verrouillage en position déployée et un passage de la position déployée à la position rabattue.

12. Siège de véhicule selon la revendication 11, **caractérisé en ce qu'**il comprend en outre un deuxième moyen de verrouillage réversible permettant un verrouillage en position rabattue et un passage de la position rabattue à la position déployée.
